# FASCICULE DE BREVET EUROPEEN

(11) **EP 0 866 973 B1**
(45) Date de publication et mention de la délivrance du brevet: **29.05.2002**
(21) Numéro de dépôt: 96941730.2
(22) Date de dépôt: 10.12.1996
(51) Int. Cl.: G01P 15/13, G01P 15/12, G01P 15/08

(54) **ACCELEROMETRE ELECTROMAGNETIQUE**
ELEKTROMAGNETISCHER BESCHLEUNIGUNGSSENSOR
ELECTROMAGNETIC ACCELEROMETER

(30) Priorité: 12.12.1995 FR 9514687
(43) Date de publication de la demande: 30.09.1998
(73) Titulaire: THALES AVIONICS S.A., 78141 Vélizy Villacoublay Cédex (FR)
(72) Inventeur: GIROUD, Pierre Thomson-CSF S.C.P.I., F-94117 Arcueil Cédex (FR); GUILLEMIN, Pierre Thomson-CSF S.C.P.I., F-94117 Arcueil Cédex (FR); MIGEON, André Thomson-CSF S.C.P.I., F-94117 Arcueil Cédex (FR); PEDRAZA-RAMOS, Sylvie Thomson-CSF S.C.P.I., F-94117 Arcueil Cédex (FR)
(74) Mandataire: Guérin, Michel
(86) Numéro de dépôt international: FR9601969
(87) Numéro de publication internationale: WO9722011

(56) Documents cités:
- DE-A- 3 740 688
- DE-A- 4 027 046
- FR-A- 2 616 547
- US-A- 4 944 184
- US-A- 5 121 633
- PATENT ABSTRACTS OF JAPAN vol. 018, no. 142 (P-1706), 9 Mars 1994 & JP 05 322926 A (MATSUSHITA ELECTRIC WORKS LTD), 7 Décembre 1993,

## Description

Le domaine de l'invention est celui des accéléromètres électromagnétiques comportant une masse mobile et des jauges piézoélectriques de détection de déplacement de cette masse et de commande d'un système d'asservissement de la position de cette masse, en utilisant des phénomènes d'induction électromagnétique. Ce type d'accéléromètre peut notamment être réalisé à partir de plaques de silicium en utilisant des technologies dérivées de celles développées dans le cadre de la fabrication de circuits intégrés et notamment être utilisé dans des géophones pour analyser très finement la nature de couches terrestres afin de détecter d'éventuelles sources pétrolières.

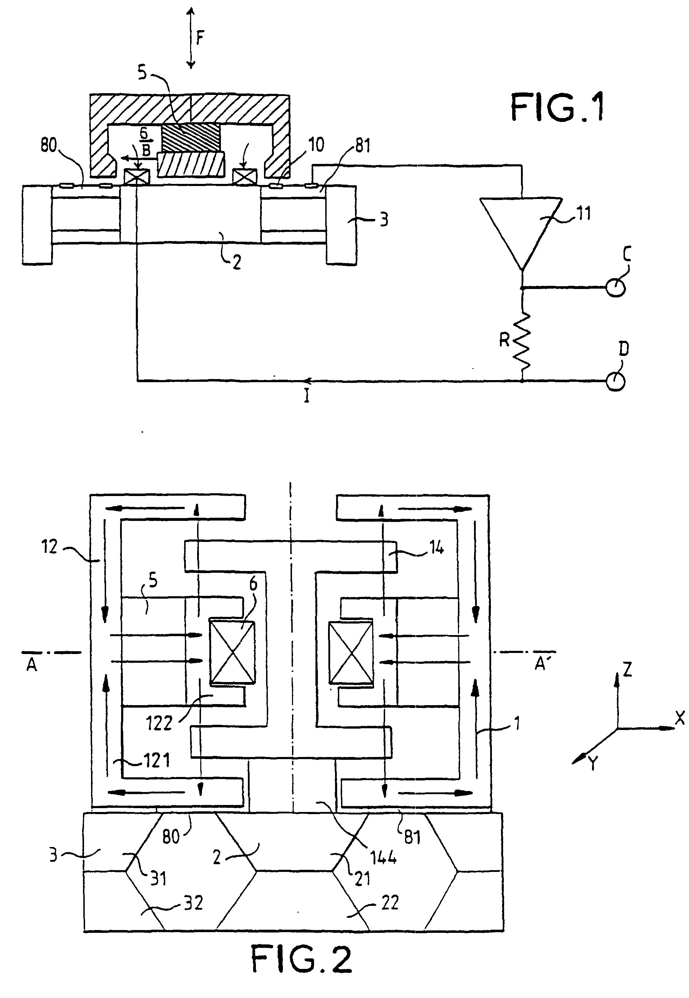

De manière générale, les jauges de contraintes d'un accéléromètre électromagnétique sont destinées à générer au moyen d'un circuit électronique, un courant d'alimentation d'une bobine pour compenser, par des phénomènes d'induction électromagnétique, un déplacement de la masse mobile sous l'effet de conditions extérieures, par exemple de mouvements sismiques mis en jeu dans des applications géophone. La valeur de l'accélération subie par la masse mobile, est déduite de la valeur du courant d'alimentation de la bobine qui est nécessaire pour empêcher le déplacement de la masse mobile. Le principe général de fonctionnement de ce type d'accéléromètre est décrit en figure 1.

Une masse mobile 2 est suspendue par des bras 80 et 81 à un cadre fixe 3. La masse mobile, les bras de suspension et le cadre fixe peuvent avantageusement être réalisés à partir de plaques de silicium. Une bobine 6 est rapportée à la masse mobile 2. Cette bobine est associée à un circuit magnétique constitué de deux pièces polaires et les pièces polaires définissent deux entrefers de canalisation de champ magnétique d'un aimant permanent 5 dont l'axe d'aimantation est perpendiculaire à la surface de la masse mobile 2. Des bras de suspension, par exemple les bras supérieurs 80 et 81 comportent des jauges de contrainte 10, qui constituent des détecteurs de déplacements de la masse mobile. Ces jauges de contrainte sont destinées à générer, au moyen d'un circuit électronique 11, un courant d'alimentation I de la bobine 6 pour compenser par des phénomènes d'induction électromagnétique, un déplacement de la masse mobile 2 sous l'effet de conditions extérieures, par exemple de mouvements sismiques. La compensation du déplacement de la masse mobile 2 sous l'action des forces d'induction électromagnétique s'effectue selon une direction symbolisée par la double flèche F qui correspond à l'axe d'aimantation de l'aimant 5. La valeur du déplacement qu'aurait subie la masse mobile 2, sous l'effet des conditions extérieures, est déduite de la valeur du courant I nécessaire pour empêcher, au moyen du système d'asservissement, le déplacement de la masse mobile. La valeur du courant I est par exemple extraite au moyen d'une résistance R sous la forme d'une tension entre deux bornes de sorties C et D.

Une limitation dans la sensibilité de ce type d'accéléromètre réside dans la raideur des bras de suspension, typiquement en silicium, telle qu'une faible force s'exerçant sur la masse mobile n'engendre pas de déplacement de cette dernière.

Or dans des applications telles que visées dans la présente invention et concernant l'identification de couches terrestres, une sensibilité très élevée est indispensable. Ce type de dispositif fonctionne selon le principe suivant. Des sources d'excitation placées au niveau du sol envoient des ondes mécaniques dans le sol, qui agissent sur des accéléromètres. La réponse desdits accéléromètres renseigne sur la nature des couches terrestres rencontrées par les ondes mécaniques créées.

Pour résoudre le problème de la raideur positive des bras de suspension des masses mobiles présentes dans les accéléromètres électromagnétiques tels que ceux décrits précédemment, l'invention a pour objet un accéléromètre utilisant un moteur magnétique à raideur négative, s'opposant à la raideur positive des bras de suspension et contribuant à augmenter la sensibilité dudit accéléromètre.

Plus précisément, l'invention a pour objet un accéléromètre électromagnétique comprenant un moteur magnétique 1 et, une masse mobile 2 suspendue à un cadre périphérique 3 et associée à des jauges de contraintes constituant des détecteurs de déplacement de la masse mobile, caractérisé en ce que le moteur magnétique comporte :
- une enceinte formée par un élément polaire 12 comprenant un aimant permanent 5, ladite enceinte comprenant une bobine 6 et étant fixée au cadre périphérique ;
- un élément polaire 14 placé dans l'enceinte et fixé à la masse mobile 2.

L'élément polaire 14 peut être fixé à la masse mobile par l'intermédiaire d'un élément amagnétique.

Avantageusement, l'enceinte est une pièce polaire de révolution.

Selon une variante de l'invention, l'élément polaire 12 comprend une partie périphérique 121 attachée au cadre périphérique 3, une partie intérieure 122, l'aimant 5 reliant les parties périphérique 121 et intérieure 122, la bobine 6 étant fixée à la partie intérieure 122, et entourant l'élément polaire 14.

Selon une variante de l'invention, l'élément polaire 14 possède une partie centrale 141 perpendiculaire au plan P₁ de la masse mobile, deux parties 142 et 143 perpendiculaires à ladite partie centrale, de manière à définir des entrefers dans des plans parallèles au plan P₁, entre l'élément 14 et l'élément 12.

Selon une variante de l'invention, la masse mobile et le cadre fixe sont définis dans l'empilement de deux plaques de silicium dites plaque supérieure 7 et plaque inférieure 8:
- la plaque supérieure comprenant :
   * la partie supérieure 21 de la masse mobile comportant deux contre-butées 41 et 42 le long d'un axe Y défini dans le plan de la masse mobile ;
   * la partie supérieure 31 du cadre fixe, comportant deux butées 43 et 44 le long d'un axe X perpendiculaire à l'axe Y et défini dans le plan de la masse mobile ;
   * les parties 21 et 31 étant reliées par des bras de suspension 80 et 81 comportant des jauges piézoélectriques ;
- la plaque inférieure comprenant ;
   * la partie inférieure 22 de la masse mobile, comportant deux contre-butées 45 et 46 le long de l'axe X ;
   * la partie inférieure 32 du cadre fixe, comportant deux butées 47 et 48 le long de l'axe Y ;
- les contre-butées 41 et 42 étant en regard des butées 47 et 48;
- les contre-butées 45 et 46 étant en regard des butées 43 et 44.

Par convention, les butées sont définies comme des éléments fixes de l'accéléromètre sur lesquelles viennent buter des contre-butées, éléments mobiles de l'accéléromètre.

Selon une variante de l'invention, l'accéléromètre est caractérisé en ce que :
- la partie 21 comprend une partie centrale 23 et deux bras de blocage 24 et 25 situés de part et d'autre de ladite partie centrale, selon l'axe Y ;
- la partie 31 comprend une partie périphérique 33 et deux bras 34 et 35 situés à l'intérieur de la partie périphérique, selon l'axe X, la plaque 7 comprenant deux bras de suspension 80 et 81 reliant la partie centrale 13 aux bras 34 et 35, lesdits bras de suspension 80 et 81 comprenant des jauges piézoélectriques;
- la partie 22 comprend une partie centrale 26 et deux bras de blocage 27 et 28 situés de part et d'autre de ladite partie centrale, selon l'axe X ;
- la partie 32 comprend une partie périphérique 36 et deux bras 37 et 38 situés à l'intérieur de la partie périphérique selon l'axe Y;
- les contre-butées 41 et 42 étant définies dans les bras de blocage 24 et 25 ;
- les butées 43 et 44 étant définies dans les bras 34 et 35 ;
- les contre-butées 45 et 46 étant définies dans les bras de blocage 27 et 28 ;
- les contre-butées 47 et 48 étant définies dans les bras 37 et 38.

Selon une variante de l'invention, les plaques 7 et 8 de l'accéléromètre comprennent des bras fins de guidage reliant la masse mobile 2 au cadre 3 de manière à ce que seuls des mouvements de la masse mobile selon un axe Z perpendiculaire au plan de ladite masse, soient possibles. Avantageusement, ces bras peuvent être situés selon deux axes orientés à 45° des axes X et Y et situés au niveau de la partie supérieure de la plaque 7 et au niveau inférieur de la plaque 8.

L'invention sera mieux comprise grâce à la description qui va suivre donnée à titre non limitatif et grâce aux figures annexées parmi lesquelles :
- la figure 1 illustre un accéléromètre comprenant un asservissement électromagnétique, selon l'art connu ;
- la figure 2 illustre un exemple de moteur utilisé dans un accéléromètre selon l'invention ;
- la figure 3 illustre un exemple de masse mobile et de cadre périphérique utilisé dans un accéléromètre selon l'invention ;
   * la figure 3a illustre un exemple de plaque supérieure 7 utilisée dans un accéléromètre selon l'invention ;
   * la figure 3b illustre un exemple de plaque inférieure 8 utilisée dans un accéléromètre selon l'invention ;
- la figure 4a illustre une coupe transversale selon un plan BB' de l'assemblage des plaques 7 et 8 illustrées en figures 3a et 3b;
- la figure 4b illustre une coupe transversale selon un plan CC' de l'assemblage des plaques 7 et 8 illustrées en figures 3a et 3b;
- la figure 5a illustre un exemple de plaque supérieure 7 comprenant 4 bras de guidage ;
- la figure 5b illustre un exemple de plaque inférieure 8 comprenant 4 bras de guidage ;
- la figure 6 illustre une vue en perspective d'un exemple d'accéléromètre selon l'invention.

Un accéléromètre selon l'invention comporte une masse mobile 2 suspendue par des bras de suspension 80 et 81 (figure 2) à un cadre périphérique 3. Les bras de suspension 80 et 81 comprennent des jauges piézoélectriques non représentées sur la figure 2. La masse mobile 2 est solidaire d'un élément polaire 14. Cet élément polaire 14 est inséré dans une enceinte constituée d'un élément polaire 12. L'élément polaire 12 est lui-même constitué d'une partie principale 121, d'une partie secondaire 122 ; les pièces principale et secondaire étant reliées par un aimant permanent 5. Une bobine 6 est solidaire de la partie secondaire 122.

Dans cet exemple de moteur à raideur négative, l'élément polaire 14 se trouve soumis à la présence de différents champs magnétiques représentés par des flèches sur la figure 2. Ces flèches sont relatives aux champs magnétiques créés par l'aimant permanent 5. Cet élément polaire 14 est dans un équilibre instable et tend à bouger le long d'un axe Z perpendiculaire au plan de la masse mobile 2. Lorsqu'il s'éloigne d'une position médiane représentée par l'axe AA', il entraîne la masse mobile et crée des contraintes au niveau des jauges piézoélectriques situées sur les bras de suspension 80 et 81. Ceci se traduit via un circuit électronique non représenté, par un courant de rappel qui commande la bobine 6 et qui tend à maintenir l'ensemble dans une position fixe.

En effet, le champ d'alimentation de la bobine 6 crée un champ magnétique au niveau de l'élément polaire 14 qui tend à faire revenir ledit élément dans le plan médian AA'. Par exemple si dans cette position d'équilibre instable, l'élément 14 à tendance à se rapprocher de la partie silicium, le courant d'asservissement créé dans la bobine, tend à éloigner ledit élément 14 de la partie silicium. Le moteur électromagnétique dit à raideur négative, qu'utilise un accéléromètre selon l'invention est donc alimenté en courant pour permettre aux jauges piézoélectriques de ramener à l'équilibre la masse mobile via l'élément 14.

Lorsque cet accéléromètre est soumis à des contraintes extérieures, type notamment mouvements sismique son fonctionnement est analogue à celui décrit précédemment, le moteur tend en permanence à ramener l'élément 14 dans le plan médian AA'.

Ce type d'asservissement permet d'utiliser des bras de suspension 80, 81 d'épaisseur suffisante pour éviter la fracture tout en préservant une sensibilité suffisante en raison de la diminution de la raideur totale de l'ensemble de l'accéléromètre.

Etant donné la haute sensibilité recherchée pour l'accéléromètre, de faibles accélérations selon l'axe sensible Z induisent de fortes contraintes dans les jauges piézoélectriques de silicium et la limite de rupture pourrait être rapidement atteinte. Pour pallier cet inconvénient l'accéléromètre selon l'invention comprend des systèmes de butées limitant les déplacements des parties mobiles selon l'axe sensible, intégrés à la partie sensible constituée de la masse mobile reliée via des bras de suspension comprenant des jauges de contraintes, à un cadre fixe.

Selon une variante de l'invention, cette partie sensible de l'accéléromètre est constituée de deux plaques de silicium 7 et 8, monocristallin dans lesquelles sont définies par élimination de matière (par gravure chimique) les bras de suspension, les jauges piézorésistives et des conducteurs électriques pour relier les jauges à l'extérieur.

Plus précisément, selon une variante de l'invention, l'ensemble des pièces 12 et 14 est solidaire d'une masse mobile 2 et d'un cadre périphérique 3 réalisés à partir de l'empilement de deux plaques de silicium.

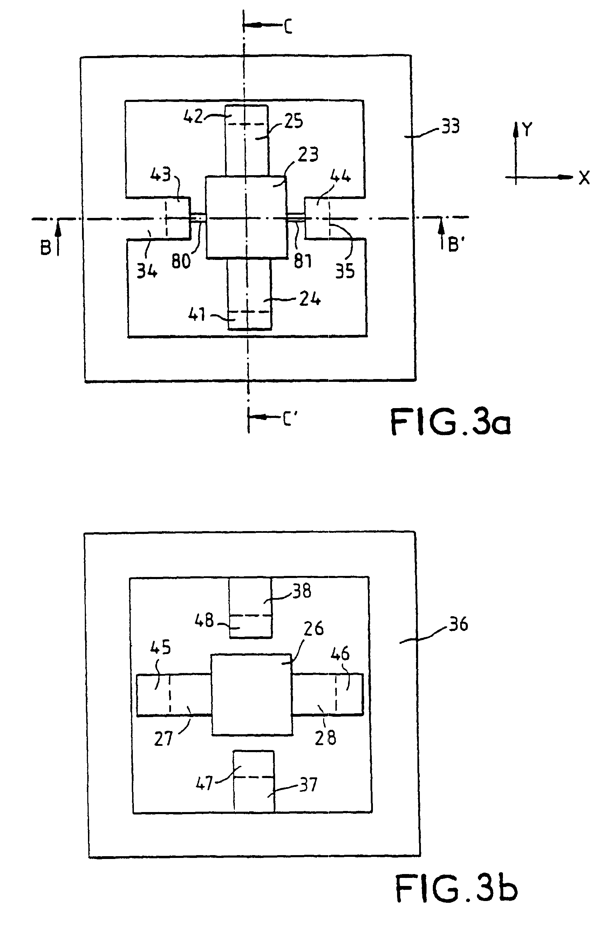

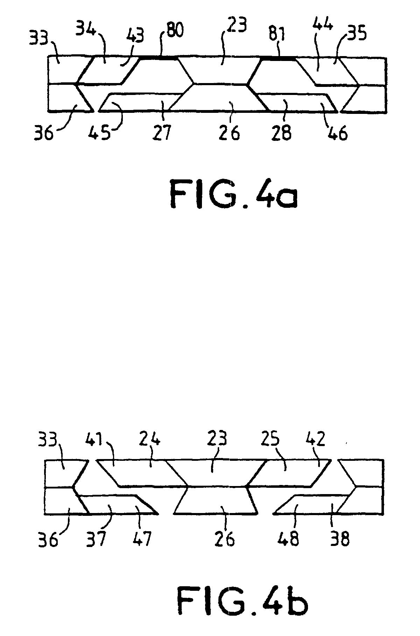

Comme l'illustre la figure 2, le cadre périphérique comprend une partie dite supérieure, partie 31 réalisée dans une première plaque de silicium dite supérieure 7, et une partie dite inférieure, partie 32 réalisée à partir d'une deuxième plaque de silicium plaque dite inférieure 8. La partie 31 est solidaire des éléments 121 et 122. De même, la masse mobile 2 comprend une partie dite supérieure, partie 21 réalisée dans la plaque 7 et une partie dite inférieure, partie 22 réalisée dans la plaque 8. La partie 21 est reliée à l'élément 14 par l'intermédiaire d'un élément 144. Sur cette figure 2, les parties 21, 22, 31 et 32 sont représentées très schématiquement et vont être décrites plus en détails grâce aux figures 3a, 3b, 4a et 4b.

Les figures 3a et 3b représentent respectivement des vues de dessus de la plaque supérieure 7 et de la plaque inférieure 8.

La plaque supérieure 7 comprend la partie supérieure de la masse mobile 21 constituée d'une partie centrale 23 et de deux bras de blocage 24 et 25 situés de part et d'autre de la partie centrale et orientés selon l'axe Y représenté en figure 3a.

La plaque supérieure 7 comprend aussi la partie supérieure 31 du cadre fixe, constituée d'une partie périphérique 33 et de deux bras 34 et 35, orientés sur la figure 3a selon l'axe X.

Une partie 42 du bras de blocage 25 et une partie 43 du bras de blocage 24 constituent des contre-butées sur la partie 21 de la masse mobile.

Une partie 43 du bras de blocage 34 et une partie 44 du bras 35 constituent des butées sur la partie 31 du cadre fixe.

Cette plaque 7 comprend également deux bras de suspension 80 et 81 reliant la partie centrale 23 de la masse mobile aux bras 34 et 35 solidaires du cadre fixe.

La figure 3b est relative à la plaque inférieure 8. Cette plaque 8 comprend la partie inférieure 22 de la masse mobile constituée d'une partie centrale 16 et de deux bras de blocage 27 et 28 orientés sur la figure 3b selon l'axe X.

La plaque 8 comprend également la partie inférieure 32 du cadre périphérique, constituée d'une partie périphérique 36 et de deux bras 47 et 48, orientés sur la figure 3b selon l'axe Y.

Une partie 42 du bras de blocage 25 et une partie 41 du bras de blocage 24 constituent des contre-butées respectivement en regard de la butée 48 partie du bras 38 et de la butée 47 partie du bras 37.

De même, une partie 45 du bras de blocage 27 et une partie 46 du bras de blocage 28 constituent des contre-butées respectivement en regard de la butée 43 du bras 34 et de la butée 44 du bras 35.

Les figures 4a et 4b illustrent des coupes transversale selon des plans BB' et CC' représentés en figure 3a ou 3b, de l'empilement des plaques 7 et 8, et mettent en évidence comment peuvent être réalisées les différentes butées et les différentes contre-butées.

Les bras 27, 28, 37 et 38 de la plaque inférieure 8 présentent la même architecture. Ils sont constitués d'un élément d'épaisseur e₁ inférieure à l'épaisseur eₒ de l'épaisseur de la plaque de silicium. Le dénivelé entre les éléments d'épaisseur e₁ et ceux d'épaisseur eₒ permet d'élaborer des butées ou contre-butées pour les contre-butées ou butées qui sont respectivement en regard.

Les bras 24, 25, 34 et 35 de la plaque supérieure 7, présentent tous la même architecture. Ils sont constitués d'un seul élément d'épaisseur eₒ, une partie de chaque bras étant en regard de la partie amincie d'un bras de la plaque inférieure 8.

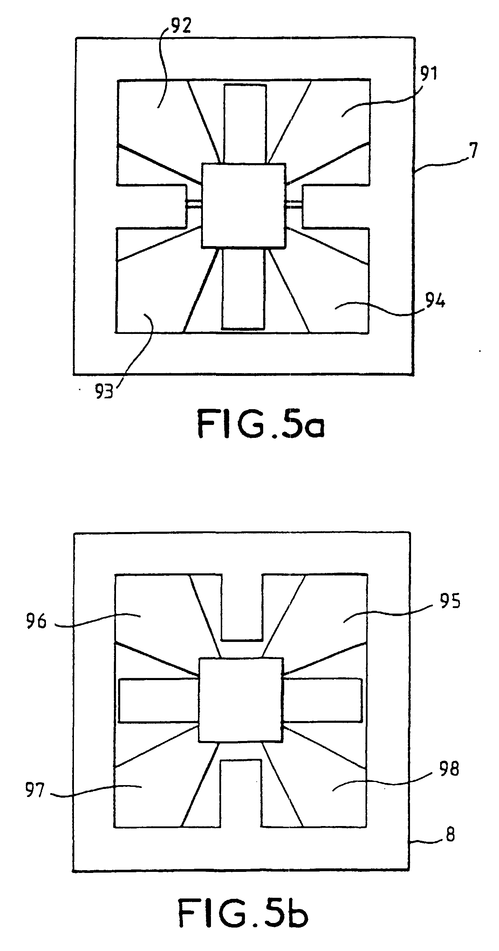

Selon une variante de l'invention, les plaques 7 et 8 comprennent également des bras fins de guidage comme illustrés en figures 5a et 5b.

La plaque supérieure 7 comprend quatre bras de guidage 91, 92, 93, 94 orientés à 45° des axes X et Y, dans un plan parallèle au plan de la masse mobile.

Ces bras de guidage peuvent être situés plus précisément dans le même plan que le plan comprenant les bras de suspension 80 et 81.

De même la plaque inférieure 8 comprend quatre bras fins de guidage 95, 96, 97, 98 également orientés à 45° des axes X et Y. Ces bras de guidage peuvent être situés dans la partie inférieure de la plaque 8.

Les différents bras de blocage, de suspension, de guidage, peuvent être réalisés par étapes de masquage par photolithographie puis par gravure.

Les plaques 7 et 8 peuvent pour cela avantageusement être des plaques type SIMOX comprenant une couche d'oxyde implanté, recouverte également d'oxyde, l'épaisseur de silicium bien contrôlée entre deux couches d'oxyde permet de définir de manière bien calibrée les bras de suspension ou les bras de guidage.

Avant assemblage de manière classique des plaques 7 et 8, les bras de blocage sont reliés à la fois à la masse ultérieurement mobile et au cadre périphérique. Lors de la fabrication des butées et contre-butées, par gravure chimique, une prédécoupe est effectuée au niveau des ouvertures prévues entre bras de blocage et ou cadre périphérique.

Après assemblage des deux plaques, la découpe finale pour libérer la masse mobile du cadre fixe est effectuée au niveau des prédécoupes, par attaque laser. Plus précisément, les prédécoupes sont effectuées respectivement :
- sur la plaque 7 entre l'élément 33 et les bras de blocage 25 et 24;
- sur la plaque 8 entre l'élément 26 et les bras 38 et 37.

Ce type d'opération permet de faciliter l'assemblage des plaques 7 et 8.

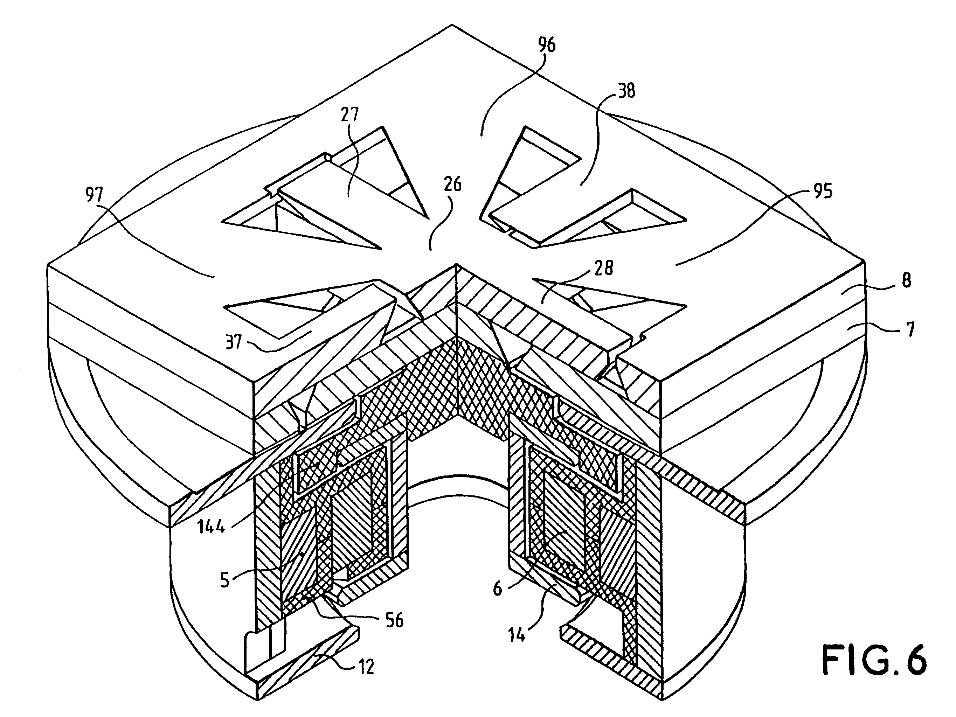

La figure 6 représente une vue en perspective d'un exemple d'accéléromètre selon l'invention, utilisant un moteur à raideur dite négative et une partie silicium réalisée à partir de l'empilement de deux plaques.

La partie moteur comprend un élément polaire 12 fixé à la partie 33 de la plaque silicium 7.

L'élément 12 est une enceinte cylindrique, présentant deux ouvertures dans des plans perpendiculaires à l'axe de révolution du cylindre. Une ouverture permet la fixation de l'élément 14 à la masse mobile. L'autre ouverture est réalisée pour ajuster en fonction de la masse polaire de l'élément 121, les forces des champs magnétiques présentent dans l'enceinte et permettant de régler une position d'équilibre

L'élément polaire 14 est relié à la partie centrale 23 de la masse 2, par l'intermédiaire de la pièce 144 qui peut typiquement être en pyrex par exemple.

L'ensemble constitué par la bobine 6 et l'aimant 5 est intégré dans une matière plastique 56 assurant la tenue de l'ensemble.

La figure 6 met en évidence une configuration d'accéléromètre comprenant des plaques de silicium dans lesquelles ont notamment été réalisés des bras de guidage tels que ceux représentés, soit les éléments 95, 96 et 97. Sur cette figure apparaissent également les deux bras de blocage 27 et 28 reliés à la partie centrale 26 de la masse mobile inscrits dans la plaque 8, ainsi que les deux bras 37 et 38 reliés au cadre fixe 36, inscrits également dans la plaque 8.

## Revendications

1. Accéléromètre électromagnétique comprenant un moteur magnétique (1) et, une masse mobile (2) suspendue à un cadre périphérique (3) et associée à des jauges de contraintes constituant des détecteurs de déplacement de la masse mobile, **caractérisé en ce que** le moteur magnétique comporte
- une enceinte formée d'un élément polaire (12) comprenant un aimant permanent (5), ladite enceinte comprenant une bobine (6) et étant fixée au cadre périphérique ;
- un élément polaire (14) placé dans l'enceinte et fixé à la masse mobile (2) maintenue dans un équilibre instable ;
de manière à constituer un moteur magnétique à « raideur négative ».

2. Accéléromètre électromagnétique selon la revendication 1, **caractérisé en ce que** l'élément polaire (14) est fixé à la masse mobile (2) par l'intermédiaire d'un élément amagnétique.

3. Accéléromètre électromagnétique selon l'une des revendications 1 ou 2, **caractérisé en ce que** les éléments polaires (12) et (13) comprennent une partie principale (121) et une partie secondaire (122) située à l'intérieur de la partie principale, lesdites parties principale et secondaire étant reliées par l'intermédiaire d'un aimant permanent (5), la bobine étant solidaire de l'élément (122) et entourant l'élément polaire (14).

4. Accéléromètre selon l'une des revendications 1 à 3, **caractérisé en ce que** l'élément polaire (14) possède une partie centrale (141) perpendiculaire au plan (P1) de la masse mobile, deux parties (142, 143) perpendiculaires à ladite partie centrale, de manière à définir des entrefers dans des plans parallèles au plan (P1), entre l'élément (14) et l'élément (12).

5. Accéléromètre selon l'une des revendications 1 à 4, **caractérisé en ce que** la masse mobile et le cadre fixe sont définis dans l'empilement de deux plaques de silicium dites plaque supérieure (7) et plaque inférieure (8) :
- la plaque supérieure comprenant:
* la partie supérieure (21) de la masse mobile comportant deux contre-butées (41, 42) le long d'un axe (Y) défini dans le plan de la masse mobile ;
* la partie supérieure (31) du cadre fixe comportant deux butées (43, 44) le long d'un axe (X) perpendiculaire à l'axe (Y) et défini dans le plan de la masse mobile ;
* les parties (21, 31) étant reliées par des bras de suspension (80, 81) comportant des jauges piézoélectriques ;
- la plaque inférieure comprenant ;
* la partie inférieure (22) de la masse mobile comportant deux contre-butées (45, 46) le long de l'axe (X) ;
* la partie inférieure (32) du cadre fixe comportant deux butées (47, 48) le long de l'axe (Y) ;
- les contre-butées (41, 42) étant en regard des butées (47, 48) ;
- les contre-butées (45, 46) étant en regard des butées (43, 44).

6. Accéléromètre selon la revendication 5, **caractérisé en ce que** la partie (21) comprend une partie centrale (23) et deux bras de blocage (24, 25) situés de part et d'autre de ladite partie centrale, selon l'axe (Y) :
- la partie (31) comprend une partie périphérique (33) et deux bras (34, 35) situés à l'intérieur de la partie périphérique, selon l'axe (X), la plaque supérieure (7) comprenant deux bras de suspension (80, 81) reliant la partie centrale (23) aux bras (34, 35) lesdits bras de suspension comprenant des jauges piézoélectriques ;
- la partie (22) comprend une partie centrale (26) et deux bras de blocage (27, 28) situés de part et d'autre de ladite partie centrale, selon l'axe X ;
- la partie (32) comprend une partie périphérique (36) et deux bras (37, 38) situés à l'intérieur de la partie périphérique selon l'axe (Y) ;
- les contre-butées (41, 42) étant définies dans les bras de blocage (24, 25) ;
- les butées (43, 44) étant définies dans les bras (34, 35) ;
- les contre-butées (45, 46) étant définies dans les bras de blocage (27, 28) ;
- les contre-butées (47) et (48) étant définies dans les bras (37) et (38).

7. Accéléromètre selon la revendication 6, **caractérisé en ce que** les plaques (7) et (8) comprennent des bras fins de guidage, reliant la masse mobile (2) au cadre périphérique (3), lesdits bras étant situés selon deux axes orientés à 45° des axes (X) et (Y).

## Patentansprüche

1. Elektromagnetischer Beschleunigungsmesser mit einem magnetischen Motor (1) und einer beweglichen Masse (2), die an einem Rahmen (3) aufgehängt und mit Kraftsensoren versehen ist, die Detektoren für die Verschiebung der beweglichen Masse bilden, **dadurch gekennzeichnet, daß** der magnetische Motor aufweist:
- einen Kasten, der von einem Polstück (12) gebildet wird und einen Dauermagneten (5) sowie eine Spule (6) enthält, sowie am Rahmen befestigt ist,
- ein Polstück (14), das sich in dem Kasten befindet und an der in einem instabilen Gleichgewicht gehaltenen beweglichen Masse (2) befestigt ist,
sodaß sich ein magnetischer Motor mit "negativer Steifheit" ergibt.

2. Elektromagnetischer Beschleunigungsmesser nach Anspruch 1, **dadurch gekennzeichnet, daß** das Polstück (14) an der beweglichen Masse (2) über ein unmagnetisches Element befestigt ist.

3. Elektromagnetischer Beschleunigungsmesser nach einem der Ansprüche 1 und 2, **dadurch gekennzeichnet, daß** der von einem Polstück gebildete Kasten (12) ein Hauptteil (121) und ein Sekundärteil (122) innerhalb des Hauptteils aufweist und daß die Haupt- und Sekundärteile über einen Dauermagneten (5) miteinander verbunden sind und die Spule mit dem Sekundärteil (122) fest verbunden ist und das Polstück (14) umgibt.

4. Beschleunigungsmesser nach einem der Ansprüche 1 bis 3, **dadurch gekennzeichnet, daß** das Polstück (14) einen zentralen Bereich (141) senkrecht zur Ebene (P1) der beweglichen Masse sowie zwei Bereiche (142, 143) senkrecht zum Zentralbereich besitzt und Luftspalte in Ebenen parallel zur Ebene (P1) der beweglichen Masse zwischen den Polstücken (14, 12) definieren.

5. Beschleunigungsmesser nach einem der Ansprüche 1 bis 4, **dadurch gekennzeichnet, daß** die bewegliche Masse und der feste Rahmen durch Stapelung von zwei Siliziumplatten, nämlich einer oberen Platte (7) und einer unteren Platte (8) definiert sind,
- wobei die obere Platte aufweist:
* den oberen Bereich (21) der beweglichen Masse mit zwei Gegenanschlägen (41, 42) entlang einer in der Ebene der beweglichen Masse definierten Achse (Y),
* den oberen Bereich (31) des festen Rahmens mit zwei Anschlägen (43, 44) entlang einer Achse (X) senkrecht zur Achse (Y) und in der Ebene der beweglichen Achse,
wobei die Bereiche (21, 31) über Suspensionsarme (80, 81) verbunden sind, die piezoelektrische Sensoren tragen,
- während die untere Platte aufweist:
* den unteren Bereich (22) der beweglichen Masse mit zwei Gegenanschlägen (45, 46) entlang der Achse (X),
* den unteren Bereich (32) des festen Rahmens mit zwei Anschlägen (47, 48) entlang der Achse (Y),
wobei die Gegenanschläge (41, 42) den Anschlägen (47, 48) gegenüberliegen und die Gegenanschläge (45, 46) den Anschlägen (43, 44) gegenüberliegen.

6. Beschleunigungsmesser nach Anspruch 5, **dadurch gekennzeichnet, daß**
- der Bereich (21) einen zentralen Bereich (23) und zwei Blockierarme (24, 25) zu beiden Seiten des zentralen Bereichs und entlang der Achse (Y) besitzt,
- der obere Bereich (31) des festen Rahmens einen peripheren Bereich (33) und zwei Arme (34, 35) innerhalb des peripheren Bereichs entlang der Achse (X) aufweist, wobei die obere Platte (7) zwei Suspensionsarme (80, 81) mit piezoelektrischen Sensoren enthält, die den zentralen Bereich (23) mit den Armen (34, 35) verbinden,
- der untere Bereich (22) der beweglichen Masse einen zentralen Bereich (26) und zwei Blockierarme (27, 28) zu beiden Seiten des zentralen Bereichs und entlang der Achse (X) besitzt,
- der untere Bereich (32) des festen Rahmens einen peripheren Bereich (36) und zwei Arme (37, 38) innerhalb des peripheren Bereichs und entlang der Achse (Y) aufweist,
wobei die Gegenanschläge (41, 42) in den Blockierarmen (24, 25), die Anschläge (43, 44) in den Armen (34, 35), die Gegenanschläge (45, 46) in den Blockierarmen (27, 28) und die Gegenanschläge (47, 48) in den Armen (37, 38) definiert sind.

7. Beschleunigungsmesser nach Anspruch 6, **dadurch gekennzeichnet, daß** die Platten (7, 8) feine Führungsarme enthalten, die die bewegliche Masse (2) mit dem Rahmen (3) verbinden und sich entlang von zwei Achsen erstrecken, die einen Winkel von 45° mit den Achsen (X, Y) einschließen.

## Claims

1. Electromagnetic accelerometer comprising a magnetic motor (1) and a moving mass (2) suspended from a peripheral frame (3) and associated with strain gauges constituting detectors of the displacement of the moving mass, **characterized in that** the magnetic motor comprises:
- a chamber formed of a pole piece (12) comprising a permanent magnet (5), the said chamber comprising a coil (6) and being fixed to the peripheral frame;
- a pole piece (14) placed in the chamber and fixed to the moving mass (2) kept in unstable equilibrium;
so as to constitute a magnetic motor with "negative stiffness".

2. Electromagnetic accelerometer according to Claim 1, **characterized in that** the pole piece (14) is fixed to the moving mass (2) via a non-magnetic element.

3. Electromagnetic accelerometer according to either of Claims 1 and 2, **characterized in that** the pole pieces (12) and (13) comprise a main part (121) and a secondary part (122) which lies inside the main part, the said main and secondary parts being connected via a permanent magnet (5), the coil being secured to the piece (122) and surrounding the pole piece (14).

4. Accelerometer according to one of Claims 1 to 3, **characterized in that** the pole piece (14) has a central part (141) perpendicular to the plane (P1) of the moving mass, two parts (142, 143) perpendicular to the said central part, so as to define gaps in planes parallel to the plane (P1) between the piece (14) and the piece (12).

5. Accelerometer according to one of Claims 1 to 4, **characterized in that** the moving mass and the fixed frame are defined in a stack of two silicon wafers known as the upper wafer (7) and the lower wafer (8):
- the upper wafer comprising:
* the upper part (21) of the moving mass including two counter-stops (41, 42) along an axis (Y) defined in the plane of the moving mass;
* the upper part (31) of the fixed frame including two stops (43, 44) along an axis (X) perpendicular to the axis (Y) and defined in the plane of the moving mass;
* the parts (21, 31) being connected by suspension arms (80, 81) including piezoelectric gauges;
- the lower wafer comprising:
* the lower part (22) of the moving mass including two counter-stops (45, 46) along the axis (X);
* the lower part (32) of the fixed frame including two stops (47, 48) along the axis (Y);
- the counter-stops (41, 42) being opposite the stops (47, 48);
- the counter-stops (45, 46) being opposite the stops (43, 44).

6. Accelerometer according to Claim 5, **characterized in that** the part (21) comprises a central part (23) and two immobilizing arms (24, 25) lying one on either side of the said central part, along the axis (Y):
- the part (31) comprises a peripheral part (33) and two arms (34, 35) which lie inside the peripheral part, along the axis (X), the upper wafer (7) comprising two suspension arms (80, 81) connecting the central part (23) to the arms (34, 35), the said suspension arms comprising piezoelectric gauges;
- the part (22) comprises a central part (26) and two immobilizing arms (27, 28) which lie one on either side of the said central part, along the axis X;
- the part (32) comprises a peripheral part (36) and two arms (37, 38) which lie inside the peripheral part along the axis (Y);
- the counter-stops (41, 42) being defined in the immobilizing arms (24, 25);
- the stops (43, 44) being defined in the arms (34, 35);
- the counter-stops (45, 46) being defined in the immobilizing arms (27, 28);
- the counter-stops (47, 48) being defined in the arms (37, 38).

7. Accelerometer according to Claim 6, **characterized in that** the wafers (7, 8) comprise slender guide arms connecting the moving mass (2) to the peripheral frame (3), the said arms lying along two axes oriented at 45° to the axes (X) and (Y).
